# EUROPÄISCHE PATENTSCHRIFT

(11) **EP 1 110 169 B1**
(45) Veröffentlichungstag und Bekanntmachung des Hinweises auf die Patenterteilung: **06.03.2002**
(21) Anmeldenummer: 99952375.6
(22) Anmeldetag: 12.08.1999
(51) Int. Cl.: G06K 9/00

(54) **VERFAHREN ZUR KAPAZITIVEN BILDERFASSUNG**
METHOD FOR CAPACITIVE IMAGE ACQUISITION
PROCEDE POUR L'ACQUISITION CAPACITIVE D'IMAGES

(30) Priorität: 13.08.1998 DE 19836770
(43) Veröffentlichungstag der Anmeldung: 27.06.2001
(73) Patentinhaber: Infineon Technologies AG, 81669 München (DE)
(72) Erfinder: VON BASSE, Paul-Werner, D-82515 Wolfratshausen (DE); WILLER, Josef, D-85521 Riemerling (DE); SCHEITER, Thomas, D-82041 Oberhaching (DE); MARKSTEINER, Stephan, D-81739 München (DE)
(74) Vertreter: Hermann, Uwe, Dipl.-Ing.
(86) Internationale Anmeldenummer: DE9902523
(87) Internationale Veröffentlichungsnummer: WO0010205

(56) Entgegenhaltungen:
- EP-A- 0 791 899
- DE-A- 19 756 560
- US-A- 4 290 052

## Beschreibung

Die vorliegende Erfindung betrifft ein Verfahren zur kapazitiven Bilderfassung, das insbesondere zur Erfassung von Fingerabdrücken mittels kapazitiv messender Sensoren geeignet ist.

Bei kapazitiven Oberflächensensoren, z. B. bei Fingerabdrucksensoren, wird der Abstand zwischen dem zu messenden Objekt (z. B. die Oberfläche des Fingers) und dem Sensor durch eine rasterförmige Anordnung kleiner Leiterflächen (Pads) gemessen. Im Falle eines Fingerabdrucksensors sind diese Leiterflächen sehr klein und besitzen eine Abmessung von ca. 50 µm bis 100 µm. Derartige kapazitiv messende Fingerabdrucksensoren sind z. B. angegeben in dem Übersichtsartikel von M. Tartagni und R. Guerrieri: "A 390dpi Live Fingerprint Imager Based on Feedback Capacitive Sensing Scheme" in ISSCC97, Seiten 154, 155 und 402. Die Kapazitäten zum Meßobjekt sind sehr klein, so daß sich parasitäre Kapazitäten z. B. zum benachbarten Leiter oder zum Träger des betreffenden Sensors störend auf das Meßergebnis auswirken. Um die kleinen Meßsignale von den relativ großen Störsignalen trennen zu können, sind empfindliche Verstärker erforderlich. Die in den verstärkten Signalen enthaltenen Störsignale können entweder direkt meßtechnisch oder nach einer AD-Wandlung durch eine digitale Bearbeitung des erhaltenen Signales unterdrückt werden. Diese Maßnahmen sind aufwendig und erfordern eine hohe Genauigkeit.

Die Patentschrift EP-A-0 791 899 offenbart einen Fingerabdrucksensor, bei dem
a) eine als Bild zu erfassende Fläche rasterartig in Bildpunkte zerlegt wird, denen eine Anordnung elektrischer Leiter zugeordnet wird, die mindestens zu jedem Bildpunkt einen Meßleiter und einen Abschirmleiter umfassen, und
b) die als Bild zu erfassende Fläche den Meßleitern gegenüber angeordnet wird, so daß zwischen den Bildpunkten und den Meßleitern jeweils eine von dem betreffenden Bildpunkt abhängige Kapazität vorhanden ist, wobei
d") eine zwischen dem Meßleiter und dem Abschirmleiter auftretende Potentialdifferenz ausgeglichen wird.

Aufgabe der vorliegenden Erfindung gemäß Anspruch 1 ist es, ein Verfahren zur kapazitiven Bilderfassung anzugeben, das insbesondere zur Erfassung von Fingerabdrücken geeignet und mit geringem technischen Aufwand durchführbar ist.

Diese Aufgabe wird mit dem Verfahren mit den Merkmalen des Anspruches 1 gelöst. Ausgestaltungen ergeben sich aus den abhängigen Ansprüchen.

Es wird erfindungsgemäß eine Anordnung aus kapazitiv messenden Einzelsensoren verwendet, die jeweils Leiterflächen umfassen, die teils als Meßleiter vorgesehen sind, teils als Abschirmleiter verwendet werden, um die Kapazitäten der Einzelsensoren gegen Nachbarsensoren abzuschirmen. Mittels als Schalter verwendeten Transistoren wird zyklisch ein vorgegebenes elektrisches Potential an sämtliche. Leiter angelegt und die Ladung, die sich infolge der durch das Bild verursachten unterschiedlichen Kapazitäten zu den Meßleitern darauf ansammelt, auf einen Sammelkondensator abgeführt. Bei diesem Vorgang wird durch eine angeschlossene Kompensationsleitung, die bei der bevorzugten Ausführungsform einen rückgekoppelten Komparator aufweist, dafür gesorgt, daß das Potential auf den Leitern zumindest näherungsweise ausgeglichen bleibt, so daß keine elektrische Spannung an den Kondensatoren anliegt und eine vorhandene Aufladung nur durch eine weitere externe Kapazität, aber nicht durch unerwünschte Verschiebungsströme zwischen den Leitern zustande gekommen sein kann.

Eine Oberfläche eines zu erfassendes Bildes, das eine örtlich veränderliche Kapazität gegenüber den in dem Raster angeordneten Leitern hervorruft, wie das bei der Hautoberfläche eines Fingerabdruckes der Fall ist, wird während des Meßvorgangs parallel zu der Fläche der Leiter angeordnet. Es ergibt sich so eine unterschiedliche Aufladung der einzelnen Meßflächen entsprechend der Kapazität des vorhandenen Bildes. Mittels mehrmaligen Aufladens und Entladens der Kondensatoren der Einzelsensoren kann die sich jeweils darauf ansammelnde Ladung auf einem weiteren Kondensator soweit addiert werden, daß diese Ladungen mit geringem technischem Aufwand gemessen werden können. Die Leiter, einschließlich den als Schutzring vorgesehenen Leitern, liegen durch die verwendete Schaltung bedingt stets auf demselben Potential, so daß zwischen sämtlichen vorhandenen Leiterflächen keine Verschiebungsströme auftreten. Auf diese Weise wird erreicht, daß mit einer im Prinzip bekannten Sensoranordnung zur Bilderfassung auch Bilder wie z. B. Fingerabdrücke erfaßt werden können, die nur sehr geringe kapazitive Unterschiede hervorrufen.

Es folgt eine genauere Beschreibung des erfindungsgemäßen Verfahrens anhand der Figuren 1 bis 3.

Figur 1 zeigt ein Schema eines Einzelsensors mit einer für das Verfahren geeigneten Schaltung.

Figur 2 zeigt Diagramme elektrischer Potentiale an verschiedenen Punkten der Schaltung aus Figur 1.

Figur 3 zeigt eine Anordnung von für das Verfahren geeigneten elektrischen Leitern in Aufsicht.

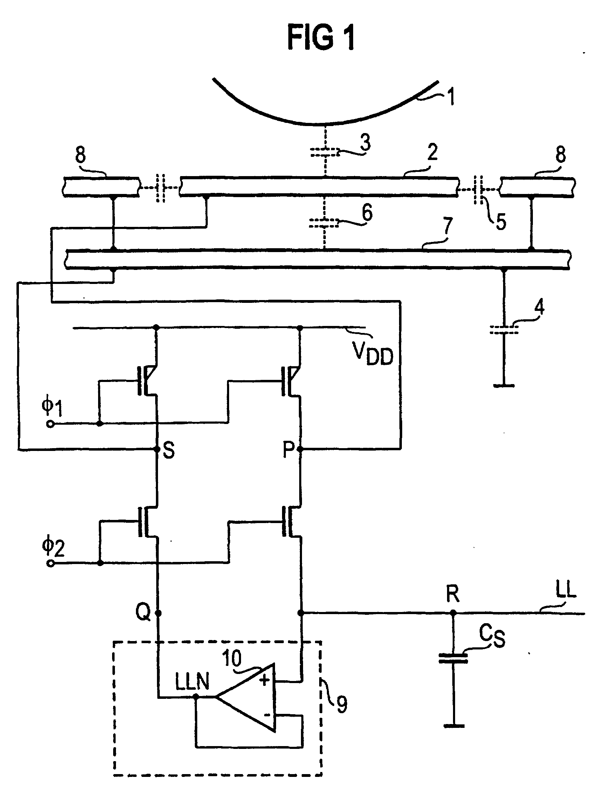

In Figur 1 ist im Schema eine für das Verfahren geeignete Anordnung von Leitern in zwei zueinander koplanaren Ebenen im Querschnitt dargestellt. Ein Ausschnitt einer Bildoberfläche 1, z. B. ein Steg eines Fingerabdruckes, befindet sich über einem Meßleiter 2 der oberen Leiterebene. Dieser Meßleiter 2 in jedem Einzelsensor ist zur Messung der Kapazität zwischen der Bildoberfläche 1 und dieser Leiterebene (Bild-Leiter-Kapazität 3) vorgesehen. In derselben Ebene befinden sich seitlich zu dem Meßleiter 2 weitere Leiter als obere Abschirmleiter 8. In einer zweiten Ebene ist dem Meßleiter 2 gegenüberliegend je ein weiterer Leiter angeordnet, der einen unteren Abschirmleiter 7 bildet und mit dem oberen Abschirmleiter 8 elektrisch leitend verbunden ist. Die zwischen dem Meßleiter 2 und dem oberen Abschirmleiter 8 vorhandene Abschirmkapazität 5 und die zwischen dem Meßleiter 2 und dem unteren Abschirmleiter 7 vorhandene Abschirmkapazität 6 sind wie die Bild-Leiter-Kapazität 3 gestrichelt eingezeichnet, um anzudeuten, daß an diesen Stellen keine Kondensatorplatten vorhanden sind, sondern das Schaltbild für einen Kondensator gemeint ist. Den oberen Abschirmleiter 8 kann man sich in diesem Beispiel so vorstellen, daß er den Meßleiter 2 rings umgibt. Die beiden in Figur 1 dargestellten Anteile des oberen Abschirmleiters 8 bilden dann den Querschnitt eines solchen rings um den Meßleiter 2 vorhandenen Abschirmleiters.

In Figur 1 ist außerdem die zugehörige Schaltung, mit der die Messung durchgeführt wird, als Beispiel eingezeichnet. Das erfindungsgemäße Verfahren wird in der Weise durchgeführt, daß zunächst in jedem Pixel des Bildfeldes die zugehörigen Leiter (Meßleiter und Abschirmleiter) auf ein bestimmtes Potential gelegt werden. Das geschieht mit der eingezeichneten Schaltung, indem die oberen eingezeichneten Transistoren über eine Taktsteuerung Φ₁ leitend geschaltet werden, so daß das Anschlußpotential V_{DD} an den eingezeichneten Punkten S und P und damit an den Leitern 2, 7, 8 des Einzelsensors anliegt.
Über die zweite Taktsteuerung Φ₂ und die beiden unteren eingezeichneten Transistoren wird anschließend die Ladung auf den Leitern so abgeführt, daß soweit schaltungstechnisch möglich keine Potentialdifferenz zwischen dem Meßleiter 2 und den beiden Abschirmleitern 7, 8 auftritt.

Vorzugsweise wird das erreicht durch einen Schaltungsteil 9, der dafür sorgt, daß an den Punkten Q und R immer dasselbe Potential anliegt. Dieser Schaltungsteil 9 ist vorzugsweise mit einem rückgekoppelten Operationsverstärker 10 aufgebaut.
Wenn über die Taktsteuerung Φ₂ die unteren eingezeichneten Transistoren leitend geschaltet werden, wird bewirkt, daß an den Punkten P und S der Schaltung ebenfalls dasselbe Potential anliegt. Das Potential wird bei einer bevorzugten Ausführung des Verfahrens für jedes Bildpixel, d. h. jeden Einzelsensor, gesondert in der beschriebenen Weise nachgeführt, so daß das Entstehen einer Potentialdifferenz an den Leitern verhindert wird. Auf diese Weise wird eine höhere Empfindlichkeit der Einzelmessung erreicht, weil Stör- oder Streukapazitäten abgeschirmt werden und unerwünschte Verschiebungsströme unterbunden sind. Außerdem wird das elektrische Feld zwischen den beiden Leiterebenen am Rand des Meßleiters 2 homogenisiert. Der untere Abschirmleiter 7 schirmt außerdem die Meßanordnung gegen eine parasitäre Kapazität ab, die z. B. durch ein Substrat, auf dem die Anordnung aufgebracht ist, hervorgerufen wird (Sensor-Untergrund-Kapazität 4 in Figur 1). Als untere Abschirmleiter 7 können prinzipiell beliebige Gegenelektroden einer mehrlagigen Metallisierung verwendet werden.

Die nach jedem Ladezyklus durchgeführte Entladung der Meßanordnung erfolgt über einen Sammelkondensator C_{S}, auf dem die Ladungen gesammelt werden, bis die Ladung auf diesem Kondensator bzw. die an diesem Kondensator anliegende Spannung so groß ist, daß sie mit relativ geringem technischem Aufwand gemessen werden kann. Aufgrund der unterschiedlichen Bild-Leiter-Kapazitäten 3 ergeben sich von Bildpunkt zu Bildpunkt unterschiedliche Ladungen auf den Leitern. Entsprechend sind die auf den Sammelkondensatoren C_{S} gesammelten Ladungen für die einzelnen Bildpunkte verschieden, so daß sich aus der Bestimmung dieser Ladungen das Bild rekonstruieren läßt.

Vorzugsweise werden die einzelnen Bildpunkte über Leseleitungen LL nach Art des Zellenfeldes eines Matrixspeichers angesteuert. Eine derartige Anordnung ist aufwendig. Sie erfordert insbesondere einen Operationsverstärker 10 und eine Kompensationsleitung LLN pro Zeile der rasterförmigen Anordnung der Einzelsensoren.

Das erfindungsgemäße Verfahren läßt sich auch mit einer einfacheren Leiterstruktur durchführen, wenn man auf eine vollständige Kompensation der Potentialdifferenz zwischen den Meßleitern 2 und den Abschirmleitern 7, 8 verzichtet. Dann genügt ein Schaltungsteil 9 zur Kompensation, und man kommt mit einem Operationsverstärker 10 für alle Leseleitungen LL aus. Dieser Operationsverstärker wird dann von dieser einen Leseleitung LL z. B. in der Mitte des Zellenfeldes (rasterförmige Anordnung der Einzelsensoren) angesteuert. Da der Potentialverlauf während der Lade- und Entladevorgänge dem mittleren Verlauf dieser Vorgänge auf den Einzelsensoren entspricht, wird in jedem Einzelsensor mit recht guter Genauigkeit kompensiert.

Eine weitere Möglichkeit, das Verfahren mit einer relativ einfachen Anordnung auszuführen, besteht darin, auf die Ansteuerung durch eine Leseleitung ganz zu verzichten. Alle Leseleitungen werden durch die zu messende Kapazität des Sensors simuliert, deren Ladung einfach auf den Sammelkondensator C_{S} abgeführt wird. Diese Ladungen werden meßtechnisch erfaßt, wenn sich genügend Ladungen nach mehreren Lade- und Entladezyklen darauf angesammelt haben. Die einfachste Form einer Kompensation ist die Festlegung auf eine feste Spannung. Man legt dazu den Punkt Q der Schaltung auf ein festes Potential und kommt dann ohne den Schaltungsteil 9 aus. Dieses Potential ist für alle Einzelsensoren gleich. Obwohl die Kompensationsleitung zu Anfang einen zu kleinen und am Schluß einen zu großen Spannungshub hat, ist im Mittel die Kompensation ausgeglichen. In den beiden beschriebenen Fällen mit gleichartiger Kompensation für alle Einzelsensoren kann die Ansteuerung vom Rand des Sensorfeldes her vorgenommen werden, was den Schaltungsaufwand stark vereinfacht.

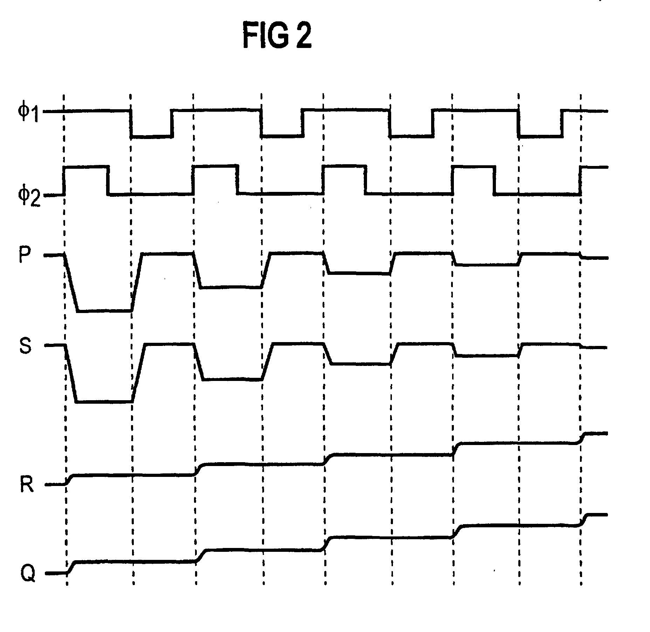

In Figur 2 sind die typischen Potentialverläufe an den einzelnen Punkten der in Figur 1 dargestellten Schaltung wiedergegeben. Die Entladetakte Φ₂ sind jeweils gegenüber den Ladetakten Φ₁ zeitlich versetzt. Die Spannungsverläufe an den Punkten P und S sind aufgrund der vorgenommenen Kompensation gleich oder im Fall der vereinfachten Ausführung des Verfahrens mit vereinfachter Schaltung zumindest näherungsweise gleich. Die Spannung an den Punkten P bzw. S fällt bei den Entladungen auf einen immer geringeren Wert ab, da der Sammelkondensator C_{S} zunehmend geladen wird, und damit die minimale Spannung an den Punkten P bzw. S im Laufe der Zeit zunimmt. Die Potentiale an dem Punkt R und an dem Punkt Q, der über die Kompensation mit dem Potential am Punkt R mitgeführt wird, sind ebenfalls in Figur 2 dargestellt.

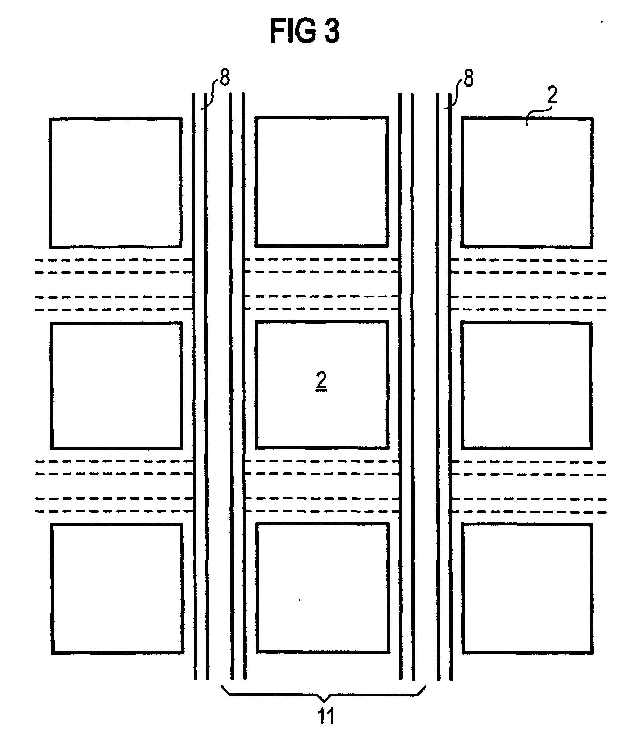

Figur 3 zeigt die rasterförmige Anordnung der jeweils für die Messung vorgesehenen Meßleiter 2 der oberen Leiterebene mit den oberen Abschirmleitern 8 dazwischen. Diese Abschirmleiter 8 sind hier als weiteres Beispiel als Streifen zwischen einzelnen Spalten 11 der matrixförmigen Anordnung eingezeichnet. Statt dieser Abschirmung zwischen einzelnen Spalten der Anordnung kann auch rings um die Meßleiter 2 je ein Abschirmleiter 8 entsprechend den gestrichelt eingezeichneten Berandungen vorhanden sein.

Das erfindungsgemäße Verfahren wird durch Anspruch 1 definiert. Es läßt sich unabhängig von der genauen Strukturierung der Leiter ausführen. Wesentlich ist dabei nur, daß zu jedem Bildpunkt eine Gruppe von Leitern vorhanden ist, von denen ein bestimmter Leiter der Bildoberfläche zugewandt ist und für die Messung vorgesehen ist, während die übrigen Leiter der Abschirmung dienen. Es muß eine Schaltung vorhanden sein, mit der das elektrische Potential auf den Abschirmleitern beim Laden und beim Entladen des Meßleiters dem Potential des Meßleiters nachgeführt werden kann. Die geometrische Anordnung der Abschirmleiter kann den jeweiligen Erfordernissen leicht angepaßt werden.

## Patentansprüche

1. Verfahren zur kapazitiven Bilderfassung, bei dem
a) eine als Bild zu erfassende Fläche (1) rasterartig in Bildpunkte zerlegt wird, denen eine Anordnung elektrischer Leiter zugeordnet wird, die mindestens zu jedem Bildpunkt einen Meßleiter (2) und einen Abschirmleiter (7, 8) umfassen,
b) die als Bild zu erfassende Fläche (1) den Meßleitern (2) gegenüber angeordnet wird, so daß zwischen den Bildpunkten und den Meßleitern (2) jeweils eine von dem betreffenden Bildpunkt abhängige Kapazität vorhanden ist,
c) an jedem Bildpunkt jeweils der Meßleiter (2) und der Abschirmleiter (7, 8) mit demselben elektrischen Potential verbunden und wieder getrennt werden,
d) an jedem Bildpunkt eine auf dem Meßleiter (2) vorhandene Ladung auf einen jeweiligen Sammelkondensator (C_{S}) entladen wird, wobei gleichzeitig eine zwischen dem Meßleiter (2) und dem Abschirmleiter (7, 8) auftretende Potentialdifferenz ausgeglichen wird, und
e) die Schritte c und d wiederholt werden, bis die auf den Sammelkondensatoren (C_{S}) angesammelten Ladungen mindestens einen für eine gesonderte Messung jedes Sammelkondensators als ausreichend vorgegebenen Wert aufweisen.

2. Verfahren nach Anspruch 1,
bei dem die Potentialdifferenz zwischen dem jeweiligen Meßleiter (2) und dem jeweiligen Abschirmleiter (7, 8) für alle Bildpunkte gleichartig ausgeglichen wird, indem die Abschirmleiter (7, 8) auf dasselbe vorgegebene Potential gelegt werden.

3. Verfahren nach Anspruch 1,
bei dem die Potentialdifferenz zwischen dem jeweiligen Meßleiter (2) und dem jeweiligen Abschirmleiter (7, 8) für alle Bildpunkte gesondert ausgeglichen wird, indem an den jeweiligen Abschirmleiter (7, 8) stets dasselbe Potential angelegt wird, das gerade an dem Meßleiter (2) anliegt.

## Claims

1. Method for capacitive image acquisition, in which
a) an area (1) to be acquired as an image is divided in a grid-like manner into pixels which are assigned an arrangement of electrical conductors comprising a measuring conductor (2) and a screening conductor (7, 8) at least for each pixel,
b) the area (1) to be acquired as an image is arranged opposite the measuring conductors (2), so that a capacitance dependent on the relevant pixel is in each case present between the pixels and the measuring conductors (2),
c) at each pixel, the measuring conductor (2) and the screening conductor (7, 8) are in each case connected to the same electrical potential and isolated again,
d) at each pixel, a charge present on the measuring conductor (2) is discharged onto a respective collecting capacitor (C_{S}), a potential difference occurring between the measuring conductor (2) and the screening conductor (7, 8) simultaneously being compensated, and
e) steps c and d are repeated until the charges collected on the collecting capacitors (C_{S}) have at least a value which is predetermined as sufficient for a separate measurement of each collecting capacitor.

2. Method according to Claim 1,
in which the potential difference between the respective measuring conductor (2) and the respective screening conductor (7, 8) is compensated identically for all of the pixels by the screening conductors (7, 8) being put at the same predetermined potential.

3. Method according to Claim 1,
in which the potential difference between the respective measuring conductor (2) and the respective screening conductor (7, 8) is compensated separately for all of the pixels by the same potential which is currently present on the measuring conductor (2) always being applied to the respective screening conductor (7, 8).

## Revendications

1. Procédé d'acquisition capacitive d'image, dans lequel
a) on décompose une surface (1) à acquérir en tant qu'image d'une manière tramée en pixels auxquels est associé un agencement de conducteurs électriques, qui comprend au moins pour chaque pixel un conducteur (2) de mesure et un conducteur (7, 8) d'anti-parasitage,
b) on dispose la surface (1) à acquérir en tant qu'image en face des conducteurs (2) de mesure, de manière qu'il y ait, entre les pixels et les conducteurs (2) de mesure, respectivement une capacité dépendante du pixel concerné,
c) sur chaque pixel, respectivement le conducteur (2) de mesure et le conducteur (7, 8) d'anti-parasitage sont reliés au même potentiel électrique et en sont reséparés,
d) sur chaque pixel, une charge présente sur le conducteur (2) de mesure est déchargée sur un condensateur (Cₛ) collecteur respectif, une différence de potentiel se produisant entre le conducteur (2) de mesure et les conducteurs (7, 8) d'anti-parasitage étant simultanément compensés et
e) les stades c et d sont répétés jusqu'à ce que les charges collectées sur les condensateurs (Cₛ) collecteurs aient une valeur donnée à l'avance comme suffisante pour une mesure séparée de chaque condensateur collecteur.

2. Procédé suivant la revendication 1, dans lequel la différence de potentiel entre le conducteur (2) de mesure respectif et le conducteur (7, 8) d'anti-parasitage respectif est compensé de la même façon pour tous les pixels en mettant les conducteurs (7, 8) d'anti-parasitage au même potentiel donné à l'avance.

3. Procédé suivant la revendication 1, dans lequel la différence de potentiel entre le conducteur (2) de mesure respectif et le conducteur (7, 8) d'anti-parasitage respectifs est compensée séparément pour tous les pixels en appliquant au conducteur d'anti-parasitage respectif toujours le même potentiel que précisément celui qui s'applique au conducteur (2) de mesure.
